# FASCICULE DE BREVET EUROPEEN

(11) **EP 0 705 477 B1**
(45) Date de publication et mention de la délivrance du brevet: **05.03.1997**
(21) Numéro de dépôt: 94919714.9
(22) Date de dépôt: 15.06.1994
(51) Int. Cl.: G21C 3/32

(54) **EMBOUT INFERIEUR FILTRANT D'UN ASSEMBLAGE COMBUSTIBLE POUR UN REACTEUR NUCLEAIRE**
FILTERFUSSSTÜCK EINES KERNREAKTORBRENNSTABBUNDELS
LOWER FILTERING NOZZLE FOR A FUEL ASSEMBLY IN A NUCLEAR REACTOR

(30) Priorité: 25.06.1993 FR 9307791
(43) Date de publication de la demande: 10.04.1996
(73) Titulaire: FRAMATOME, 92400 Courbevoie (FR); COGEMA, F-78141 Velizy Villacoublay (FR)
(72) Inventeur: RONDEPIERRE, Jean-François, F-69009 Lyon (FR); NOAILLY, Jean, F-69005 Lyon (FR)
(74) Mandataire: Bouget, Lucien
(86) Numéro de dépôt international: FR9400717
(87) Numéro de publication internationale: WO9500956

(56) Documents cités:
- EP-A- 0 184 219
- EP-A- 0 196 611
- US-A- 5 132 077

## Description

L'invention concerne un embout inférieur filtrant d'un assemblage de combustible pour un réacteur nucléaire refroidi par de l'eau et en particulier pour un réacteur nucléaire refroidi par de l'eau sous pression.

Les réacteurs nucléaires refroidis par de l'eau et en particulier les réacteurs nucléaires refroidis par de l'eau sous pression comportent un coeur constitué par des assemblages de forme générale prismatique comprenant une ossature dans laquelle sont disposés des crayons combustibles et qui comporte en particulier deux embouts d'extrémité assurant la fermeture de l'ossature et la retenue éventuelle des crayons susceptibles de se déplacer par glissement à l'intérieur de l'ossature.

L'un des deux embouts, appelé embout inférieur, qui est destiné à venir reposer sur une plaque inférieure de coeur du réacteur comporte généralement des pieds supports et une plaque adaptatrice transversale qui est percée d'ouvertures.

La partie inférieure des pieds supports vient reposer sur la plaque inférieure de coeur qui est traversée par des ouvertures de passage d'eau, au niveau de chacune des positions d'assemblages combustibles.

L'eau de refroidissement du coeur du réacteur traversant la plaque inférieure de coeur par les ouvertures de passage est répartie entre les crayons de l'assemblage combustible par les ouvertures de traversée de la plaque adaptatrice.

Des débris, par exemple des copeaux métalliques se trouvent, après un certain temps de fonctionnement du réacteur, en suspension dans l'eau de refroidissement et sont entraînés par l'eau en circulation.

Les crayons de l'assemblage combustible sont maintenus par des grilles-entretoises qui comportent des cellules à l'intérieur desquelles les crayons sont maintenus en appui sur des butées rigides par des éléments élastiques tels que des ressorts.

Dans le cas où l'eau de refroidissement contient en suspension des débris dont la dimension est supérieure à la dimension des espaces libres existant entre les crayons et les parois des grilles de l'assemblage, ces débris sont susceptibles de venir se coincer entre les crayons et les parois des grilles pendant la circulation du fluide de refroidissement.

Ces débris coincés au niveau des grilles mais néanmoins agités par l'eau peuvent entraîner une usure locale de la gaine allant éventuellement jusqu'à son perçage.

Il est donc souhaitable d'éviter l'introduction de débris de taille supérieure à la taille des espaces libres des grilles-entretoises à l'intérieur de l'assemblage combustible.

Il est connu d'associer à la plaque adaptatrice de l'embout inférieur de l'assemblage, des moyens de filtration de l'eau de refroidissement susceptibles d'arrêter les débris présentant une taille supérieure à une certaine limite qui correspond à la dimension des espaces libres autour des crayons dans les cellules des grilles-entretoises.

Ces moyens de filtration peuvent être réalisés au moyen d'éléments rapportés sur la plaque adaptatrice ou encore en prévoyant un perçage de la plaque adaptatrice par des ouvertures dont la dimension est inférieure à la taille des débris susceptibles de se coincer au niveau des grilles-entretoises de l'assemblage.

De tels moyens de filtration permettent d'arrêter les débris en-dessous de la plaque adaptatrice, de sorte que ces débris ne puissent pénétrer à l'intérieur de l'assemblage. Cependant, les débris retombent généralement sur la plaque inférieure de coeur et peuvent être entraînés vers des assemblages voisins.

Les embouts connus ne permettent donc pas de réaliser un piégeage des débris transportés et arrêtés au niveau des plaques adaptatrices et une purification de l'eau de refroidissement par élimination des débris au moment des opérations de déchargement et de rechargement du coeur du réacteur nucléaire.

On connaît d'autre part par le US-A-5.132.077 des embouts inférieurs pour assemblages combustibles qui comportent un élément inférieur de support sous la forme d'une plaque parallèle à la plaque adaptatrice de l'embout percée d'ouvertures au niveau de chacune desquelles est fixé un diffuseur dirigé vers l'intérieur de l'embout et évasé en direction de la plaque adaptatrice. L'élément inférieur de support est destiné à venir reposer sur la plaque inférieure de coeur du réacteur, de manière que les ouvertures munies d'un diffuseur soient superposées avec des ouvertures de traversée de la plaque inférieure du coeur. Un tel dispositif doit permettre d'optimiser les pertes de charge du fluide à la traversée de l'embout inférieur de l'assemblage mais n'apporte aucune amélioration en ce qui concerne la filtration et le piégeage de débris entraînés par l'eau de refroidissement.

On connaît également des embouts inférieurs qui comportent des dispositifs de filtration et de piégeage de débris de forme complexe ayant des parois percées d'ouvertures et disposés à l'intérieur de l'embout entre l'élément de support inférieur de l'embout et la plaque adaptatrice. Un tel embout inférieur décrit dans le EP-A-0.196.611 peut également comporter des diffuseurs de fluide fixés au niveau des ouvertures d'entrée du fluide dans les dispositifs de filtration et de piégeage, de manière qu'une partie du fluide passe à l'intérieur du diffuseur et une autre partie à l'extérieur. Les diffuseurs qui permettent de répartir le fluide de refroidissement de manière uniforme dans la section de l'embout filtrant n'ont aucun rôle en ce qui concerne la retenue des débris.

De tels dispositifs sont de réalisation complexe et occupent un volume important à l'intérieur de l'embout inférieur de l'assemblage combustible sans résoudre de manière optimale le problème relatif au piégeage et à la filtration des débris.

Le but de l'invention est donc de proposer un embout inférieur filtrant d'un assemblage combustible pour un réacteur nucléaire refroidi par de l'eau comportant un élément inférieur de support destiné à venir reposer sur une plaque inférieure de coeur du réacteur au niveau d'au moins une ouverture de passage d'eau de refroidissement traversant la plaque inférieure de coeur et comprenant au moins un diffuseur d'eau de forme évasée dirigé suivant une direction longitudinale de l'assemblage, et une plaque adaptatrice supérieure de direction transversale traversée par des ouvertures de passage d'eau de refroidissement et munie de moyens de filtration et de retenue des débris entraînés par l'eau de refroidissement, le diffuseur d'eau étant disposé dans le prolongement axial de l'ouverture de passage d'eau de la plaque inférieure de coeur sur laquelle repose l'assemblage et évasé en direction de la plaque adaptatrice, cet embout inférieur, de forme simple, permettant de réaliser un piégeage efficace des débris entraînés par l'eau de refroidissement et arrêtés par les moyens de filtration.

Dans ce but, le diffuseur est constitué par un conduit de forme globalement tronconique comportant une partie d'entrée suivant la petite base du conduit tronconique, dont le rayon est sensiblement égal au rayon des ouvertures de passage d'eau de la plaque inférieure de coeur et qui est superposée à une ouverture de passage d'eau, une partie d'extrémité de sortie disposée au voisinage des moyens de filtration et de retenue des débris de la plaque adaptatrice et au moins une ouverture dans une partie du conduit, au voisinage de sa petite base constituant le col du diffuseur, dont la dimension est inférieure à la dimension des débris arrêtés par les moyens de filtration et de piégeage de la plaque adaptatrice, de manière à mettre en communication l'espace intérieur du conduit avec une zone de piégeage de l'espace intérieur de l'embout, entre l'élément inférieur de support et la plaque adaptatrice, la circulation d'eau de refroidissement dans le conduit du diffuseur produisant une pression dynamique utilisée pour faire circuler l'eau de haut en bas à l'extérieur des diffuseurs dans la zone de piégeage par aspiration au niveau des ouvertures.

Afin de bien faire comprendre l'invention, on va maintenant décrire un embout inférieur selon l'invention et suivant plusieurs modes de réalisation et son utilisation pour réaliser le piégeage de débris ou corps migrants entraînés par l'eau de refroidissement d'un réacteur nucléaire.

La figure 1 est une vue schématique en élévation et en coupe partielle de la partie inférieure d'un assemblage de combustible d'un réacteur nucléaire à eau sous pression reposant sur la plaque inférieure de coeur du réacteur.

La figure 2 est une vue en coupe par un plan vertical d'un embout inférieur d'assemblage de combustible suivant l'invention et suivant un premier mode de réalisation.

La figure 3 est une vue partielle en coupe par un plan vertical d'un embout inférieur d'assemblage de combustible suivant l'invention et suivant un second mode de réalisation.

La figure 4 est une vue partielle en coupe par un plan vertical d'une variante de réalisation de l'embout représenté sur la figure 3.

La figure 5 est une vue partielle en coupe par un plan vertical d'un embout inférieur d'un assemblage de combustible selon l'invention et selon un troisième mode de réalisation.

La figure 6 est une vue en coupe par un plan vertical d'un embout inférieur d'un assemblage de combustible suivant l'invention et suivant un quatrième mode de réalisation.

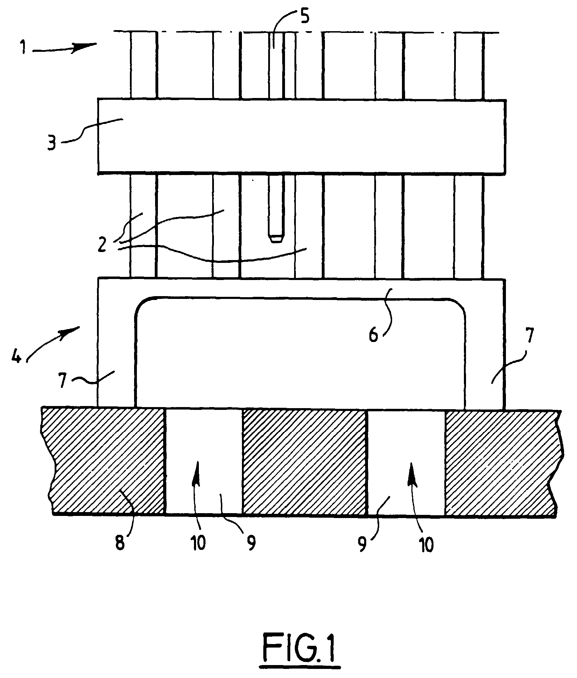

Sur la figure 1, on voit la partie inférieure d'un assemblage de combustible d'un réacteur nucléaire à eau sous pression désigné de manière générale par le repère 1.

L'assemblage de combustible 1 comporte une ossature constituée par des tubes-guides 2, des grilles-entretoises 3 et des embouts d'extrémité tels que l'embout inférieur 4 fixé aux extrémités des tubes-guides 2. A l'intérieur de l'ossature de l'assemblage de combustible, sont disposés des crayons combustibles tels que le crayon 5, de manière que ces crayons combustibles constituent un faisceau dans lequel les crayons sont parallèles entre eux et maintenus par les grilles-entretoises. Les crayons sont de plus disposés de manière à constituer un réseau régulier dans les sections transversales de l'assemblage.

L'embout inférieur 4 comporte une plaque adaptatrice 6 et des pieds supports 7. Lorsque l'assemblage de combustible repose sur la plaque inférieure de coeur 8 du réacteur, par l'intermédiaire de la partie inférieure des pieds 7, la plaque adaptatrice 6 est dans une disposition parallèle à la plaque de support de coeur 8. La plaque adaptatrice 6 permet d'assurer la fixation des tubes-guides 2 et donc la rigidification de la structure de l'assemblage et la retenue des crayons 5 dans le cas où ces crayons viendraient à glisser à l'intérieur des grilles 3 de l'ossature.

La plaque inférieure de coeur 8 est percée d'ouvertures telles que 9 assurant le passage d'eau de refroidissement, comme représenté schématiquement par les flèches 10.

La plaque adaptatrice 6 est percée d'ouvertures permettant d'assurer la répartition de l'eau de refroidissement à l'intérieur de l'ossature de l'assemblage de combustible dans le faisceau de crayons 5. Comme il sera montré plus loin, dans le cas d'embouts inférieurs suivant l'invention, l'embout peut comporter des diffuseurs placés dans le prolongement des ouvertures 9 de traversée de la plaque de support de coeur 8, fixés sur un élément de support inférieur de l'assemblage de combustible et évasés en direction de la plaque adaptatrice 6.

Des moyens de filtration de l'eau de refroidissement peuvent être associés à la plaque adaptatrice 6 de l'embout inférieur 4. De tels moyens de filtration peuvent être constitués par exemple par une plaque 18 percée d'ouvertures circulaires, carrées ou d'autres formes, rapportée contre la face inférieure de la plaque adaptatrice 6.

Ces moyens de filtration peuvent être également réalisés sous la forme d'un réseau de perçage de petites dimensions traversant la plaque adaptatrice 6.

Généralement, la plaque inférieure de coeur 8 est percée de quatre ouvertures de passage de fluide de refroidissement telles que 9 disposées en carré à l'aplomb de chacun des assemblages de combustible tels que 1.

Les moyens de filtration des débris associés à la plaque adaptatrice 6 permettent d'arrêter les débris ayant une dimension supérieure à une certaine limite, en-dessous de la face inférieure de la plaque adaptatrice 6 et d'éviter ainsi que ces débris ne pénètrent à l'intérieur de l'assemblage et ne viennent se coincer dans des espaces libres existants entre les cellules des grilles-entretoises 3 et les crayons combustibles 5.

Cependant, dans le cas d'un embout inférieur selon l'art antérieur, les débris sont susceptibles de retomber sur la plaque inférieure de coeur 8 et de se fragmenter au cours du temps au contact de la barrière filtrante, lorsque l'assemblage ne comporte pas de moyen de piégeage des débris. Les débris ne peuvent être éliminés au moment du déchargement du coeur et restent à l'intérieur de la cuve du réacteur.

Lors du redémarrage du réacteur nucléaire après rechargement, ces débris sont de nouveau entraînés par l'eau de refroidissement, de sorte que la quantité de débris dans l'eau de refroidissement du réacteur est susceptible d'augmenter constamment pendant la durée de vie du réacteur.

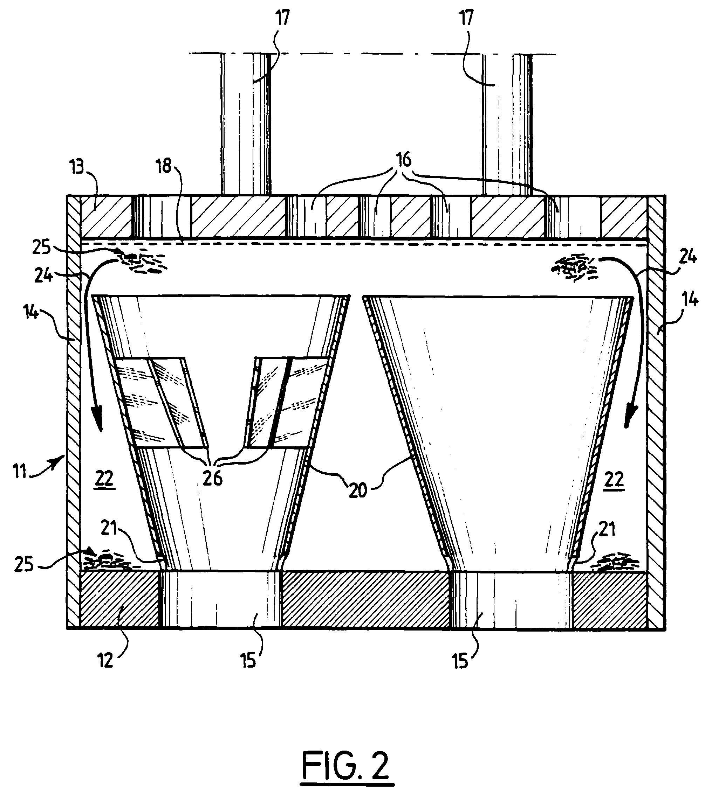

Sur la figure 2, on a représenté un embout inférieur d'assemblage de combustible 11 suivant l'invention permettant de réaliser de manière simple le piégeage et la retenue des débris entraînés par le fluide de refroidissement du réacteur.

L'embout inférieur 11 suivant l'invention comporte une plaque de support inférieure 12, une plaque adaptatrice 13 parallèle à la plaque de support 12 et des parois latérales 14 constituant avec les plaques 12 et 13, un boîtier de forme parallélépipédique dont les bases 12 et 13 sont de forme carrée.

La plaque de support 12 est percée d'ouvertures de passage de fluide 15 dont le diamètre est sensiblement égal au diamètre des trous de traversée de la plaque inférieure de coeur du réacteur sur laquelle l'embout 11 vient reposer lors du chargement de l'assemblage de combustible.

La plaque inférieure de coeur de l'assemblage comporte quatre trous de passage d'eau de refroidissement au niveau de chacun des assemblages et la plaque de support 12 est elle-même percée de quatre trous 15 venant se superposer exactement aux trous de traversée de la plaque de support de coeur.

La plaque adaptatrice 13 est traversée par un ensemble d'ouvertures de passage d'eau de refroidissement 16 pouvant présenter des diamètres différents dans différentes zones de la plaque adaptatrice. De plus, la plaque adaptatrice 13 est percée d'ouvertures dans lesquelles sont introduits et fixés rigidement les extrémités des tubes-guides 17 de l'assemblage.

Sous la plaque adaptatrice 13 est fixée une plaque de filtration 18 susceptible d'arrêter tous les débris entraînés par le fluide de refroidissement dont la dimension est telle que ces débris pourraient venir se coincer dans les espaces libres entre les crayons et les cellules des grilles-entretoises de l'assemblage.

De plus, l'embout 11 comporte des éléments diffuseurs 20 fixés sur la face supérieure de la plaque de support 12 au niveau de chacune des ouvertures de traversée 15 de l'eau de refroidissement de l'assemblage combustible.

Les diffuseurs 20 sont des éléments en forme de conduits tronconiques et sont fixés au niveau d'une zone voisine de leur petite base dont le rayon est sensiblement égal au rayon des ouvertures 15, le long des bords des ouvertures 15 de traversée de la plaque 12.

Les diffuseurs 20 sont placés avec leurs axes dans le prolongement de l'axe des ouvertures 15, c'est-à-dire dans une direction longitudinale de l'assemblage combustible et sont évasés en direction de la plaque adaptatrice 13 comportant les ouvertures 16 de traversée du fluide de refroidissement. Les parties d'entrée des diffuseurs sont constituées par les ouvertures 15 superposées aux trous de traversée de la plaque inférieure de coeur, de sorte que le fluide traversant la plaque inférieure de coeur passe intégralement à l'intérieur des diffuseurs. La partie d'extrémité supérieure des diffuseurs 20 se trouve en dessous et à une faible distance de la plaque de filtration 18.

Selon l'invention, les diffuseurs 20 comportent chacun au moins une ouverture 21 dans une zone voisine de la petite base de l'enveloppe tronconique du diffuseur, c'est-à-dire dans une zone où la section du diffuseur est minimale. Cette zone constitue un col pour l'écoulement de fluide de refroidissement pénétrant dans l'embout 14 par les ouvertures 15.

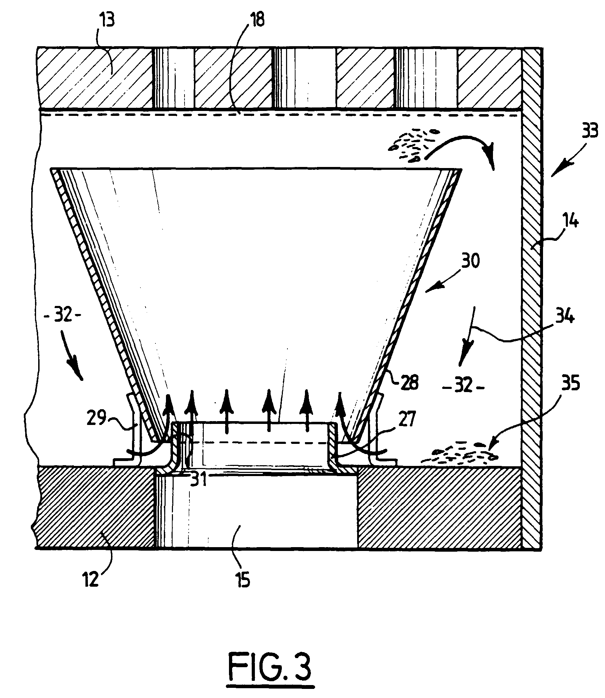

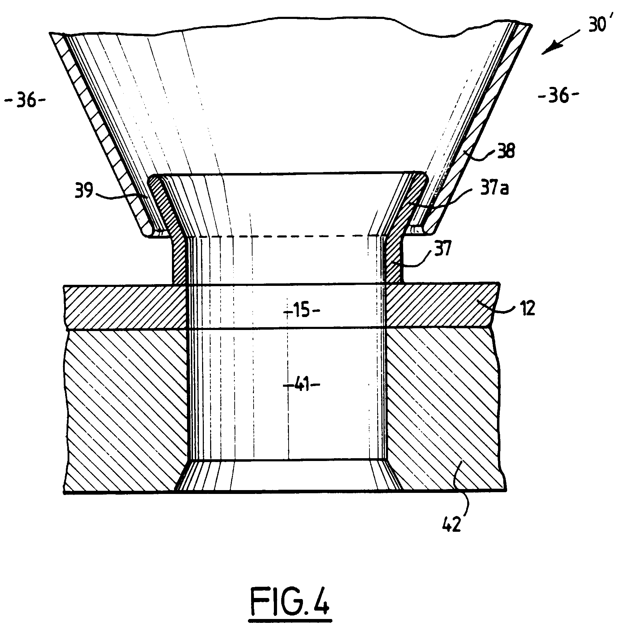

Au niveau du col, la vitesse importante du fluide génère une pression dynamique qui est mise à profit pour faire circuler le fluide de haut en bas à l'extérieur des diffuseurs dans un espace 22, par aspiration au niveau des ouvertures 21. Afin de récupérer la plus grande partie de la pression dynamique pour effectuer cette aspiration, on orientera les orifices 21 de telle manière qu'ils soient à contre-courant par rapport aux jets issus des orifices 15. La réalisation pratique des orifices 21 peut se faire de nombreuses manières. Deux exemples sont décrits plus loin (figures 3 et 4). La représentation des orifices 21 sur la figure 2 n'est que schématique. La circulation du fluide dans l'espace 22 en direction des ouvertures 21 est représentée par les flèches 24. Les débris tels que 25 entraînés par l'eau de refroidissement et arrêtés par la plaque de filtration 18 sont donc aspirés à l'intérieur de l'espace 22 et viennent se déposer sur la face supérieure de la plaque support 12, à la partie inférieure de l'espace 22.

La dimension de la ou des ouvertures 21 à la base des diffuseurs 20 est inférieure à la dimension des débris arrêtés par la grille 18, de sorte que les débris aspirés à l'intérieur des espaces 22 ne peuvent sortir et sont piégés dans les espaces 22 soumis à une aspiration due à la pression dynamique de l'eau de refroidissement en circulation dans l'embout inférieur 11.

Pour améliorer les pertes de charge globales de l'eau de refroidissement par les diffuseurs 20, ceux-ci peuvent comporter des déflecteurs 26 fixés sur leur surface intérieure et délimitant des espaces d'écoulement évasés en direction de la plaque adaptatrice 13, c'est-à-dire de bas en haut.

Lors d'un arrêt du réacteur nucléaire, la circulation du fluide de refroidissement est interrompue et les débris 25 restent piégés dans les espaces 22 des embouts inférieurs d'assemblages combustibles tels que l'embout 11.

Lors du déchargement des assemblages de combustible, les débris qui ont été piégés sont donc enlevés de la cuve du réacteur avec les assemblages de combustible, ce qui permet de réaliser une épuration du fluide de refroidissement du réacteur et un nettoyage du circuit primaire dans lequel circule l'eau de refroidissement.

Sur la figure 3, on a représenté une variante de réalisation de l'embout suivant l'invention permettant de faciliter le montage des diffuseurs et de rendre maximum l'effet d'aspiration au niveau du col du diffuseur.

Les éléments correspondants sur les figures 2 et 3 portent les mêmes repères à l'exception du diffuseur qui sera désigné par le repère 30, dans son mode de réalisation représenté sur la figure 3.

Le diffuseur 30 comporte une collerette 27 constituant sa partie d'entrée fixée à sa périphérie sur la partie de sortie de l'ouverture 15 de traversée de la plaque support 12 de l'embout inférieur et une enveloppe tronconique 28 qui peut être fixée par des supports 29 sur la face supérieure de la plaque support 12 et qui est engagée, par sa petite base, sur une partie cylindrique de la collerette 27 constituant un conduit d'entrée du fluide de refroidissement dans le diffuseur 30.

L'enveloppe tubulaire tronconique du diffuseur 30 présente une petite base dont le rayon est supérieur au rayon de la partie cylindrique de la collerette 27, de sorte que la totalité du fluide de refroidissement passant par l'ouverture 15 pénètre dans le diffuseur et l'enveloppe tronconique est engagée avec jeu autour de la collerette et ménage une ouverture 31 sur toute la périphérie de la collerette 27, cette ouverture 31 mettant en communication l'espace intérieur du diffuseur 30 avec un espace 32 délimité à l'intérieur de l'embout, par la face supérieure de la plaque 12 et une partie de la surface latérale du diffuseur 30.

La section de passage du fluide est minimale au niveau de la partie cylindrique de la collerette 27 par laquelle le fluide entre à l'intérieur du diffuseur 30.

La forte pression dynamique qui en résulte produit donc une aspiration à l'intérieur des espaces 32, en direction de la partie inférieure de ces espaces, au-dessus de la plaque support 12.

Les débris entraînés par l'eau de refroidissement et qui viennent heurter la grille de filtration 18 sont rapidement entraînés par les turbulences du fluide en-dessous de la plaque adaptatrice 13, vers la partie périphérique des diffuseurs, au-dessus de leur bord supérieur constituant la grande base du tronc de cône.

Les débris sont alors aspirés à l'intérieur d'un espace 32, comme indiqué par les flèches 34.

Les débris 35 viennent se déposer sur la face supérieure de la plaque support 12, à la partie inférieure des espaces de piégeage 32.

Les embouts inférieurs suivant l'invention tels que l'embout 11 représenté sur la figure 2 ou l'embout 33 représenté sur la figure 3 doivent être réalisés de manière démontable, pour qu'on puisse accéder à la partie inférieure de la plaque adaptatrice 13 et aux fixations des tubes-guides tels que 17 engagés dans des ouvertures.

Il est possible de réaliser une fixation démontable entre les parois latérales 14 du boîtier de l'embout et la plaque adaptatrice 13, de manière à séparer l'ensemble du boîtier, de la plaque support et des diffuseurs, de la plaque adaptatrice pour accéder aux fixations des tubes-guides.

Il est également possible de réaliser une liaison fixe entre les parois 14 du boîtier et la plaque adaptatrice 13 et une liaison démontable entre la plaque support 12 et les parois 14 du boîtier, pour accéder à la partie inférieure de la plaque adaptatrice 13, par l'intérieur du boîtier, après démontage de la plaque support 12 sur laquelle sont fixés les diffuseurs.

Dans tous les cas, les ouvertures mettant en communication la partie du col du diffuseur en dépression avec la zone de piégeage du volume interne du boîtier ont une dimension inférieure à la dimension des débris nocifs qui sont arrêtés par la grille de filtration.

Sur la figure 4, on a représenté une variante de réalisation d'un diffuseur présentant une ouverture au voisinage de sa partie de col et qui est constitué par une collerette 37 fixée sur la plaque de support 12 de l'embout suivant le bord d'une ouverture 15 de traversée de la plaque 12 et une paroi tubulaire 38 de forme tronconique engagée par sa partie de faible section au voisinage de sa petite base, sur l'extrémité supérieure de la collerette 37.

Selon la variante représentée sur la figure 4, la collerette 37 comporte une partie cylindrique fixée sur la plaque support 12 suivant le bord de l'ouverture 15 constituant la partie d'entrée du diffuseur et une partie tronconique 37a dans le prolongement de la partie cylindrique.

La partie tronconique 37a de la collerette 37 présente un angle au sommet sensiblement égal à l'angle au sommet de la partie tubulaire tronconique 38 et une section inférieure à la section minimale transversale de la partie inférieure de l'enveloppe tubulaire tronconique 38. On ménage ainsi une ouverture annulaire continue 39 de faible largeur entre la partie tronconique 37a de la collerette 37 et la partie d'extrémité inférieure de l'enveloppe tubulaire 38.

L'ouverture 39 permet de mettre en communication le volume intérieur de l'enveloppe tronconique 38 du diffuseur, au voisinage de son col, avec un ou plusieurs espaces de piégeage 36 limités à l'intérieur de l'embout par la face supérieure de la plaque de support 12 et par la paroi extérieure du diffuseur 30'.

La plaque de support 12 est destinée à venir reposer sur une plaque de support de coeur 42 au niveau d'une ouverture de traversée 41 de cette plaque dont le diamètre est égal au diamètre d'une ouverture 15 de la plaque de support 12.

L'eau de refroidissement du réacteur traverse la plaque inférieure de coeur 42 et la plaque de support 12 de l'embout inférieur de l'assemblage, à travers les ouvertures 41 et 15. La totalité de l'eau de refroidissement passant à travers les ouvertures 15 et 41 pénètre alors dans l'embout inférieur par l'intermédiaire de la collerette 37 puis circule dans l'embout à l'intérieur du diffuseur 30'.

Du fait de la forme évasée de la partie supérieure de la collerette 37, l'écoulement d'eau à l'entrée du diffuseur est très peu perturbé.

La zone de col du diffuseur qui est mise en communication avec les zones de piégeage 36 de l'embout se trouve en dépression du fait de la circulation du fluide de refroidissement à grande vitesse à l'intérieur du diffuseur.

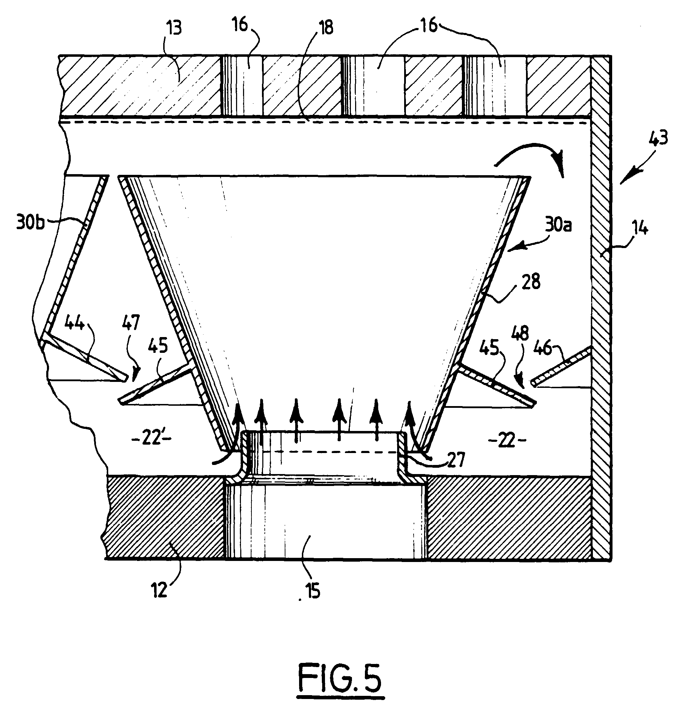

Sur la figure 5, on a représenté un troisième mode de réalisation d'un embout inférieur 43 suivant l'invention permettant d'assurer une retenue efficace des débris à l'intérieur des zones de piégeage de l'espace interne de l'embout, même si lors de manutentions, l'assemblage combustible est retourné de 180°, de sorte que son embout inférieur se trouve en position supérieure.

L'embout 43 représenté sur la figure 5 est pratiquement identique à l'embout 33 représenté sur la figure 3, les éléments correspondants sur les figures 3 et 5 portant les mêmes repères. En plus de ces éléments, l'embout 43 représenté sur la figure 5 comporte des déflecteurs tels que 44, 45 et 46 définissant des chicanes de retenue des débris au-dessus des espaces de piégeage 22 et 22'. La paroi de déflexion 45 peut être constituée par une collerette tronconique fixée sur la surface extérieure du conduit tubulaire tronconique 28 du diffuseur 30a. La paroi de déflexion 44 peut être également constituée par une collerette tronconique fixée sur la surface extérieure d'un diffuseur 30b de l'embout 43 disposé de manière adjacente par rapport au diffuseur 30a. La paroi de déflexion 46 est une paroi inclinée fixée sur la surface intérieure d'une paroi 14 du boîtier de l'embout inférieur 43 de l'assemblage. Les collerettes tronconiques 44 et 45 sont fixées sur les parois des diffuseurs 30a et 30b, par soudure le long de leur petite base. L'extrémité libre de la collerette 44 suivant sa grande base vient chevaucher, au-dessus d'un espace de piégeage 22', le bord externe libre de la collerette 45, de façon à constituer une chicane 47 au-dessus du fond de l'espace de piégeage 22' entre les diffuseurs 30a et 30b, au-dessus de la face supérieure de la plaque support 12. De même, la paroi de déflexion 46 est fixée de manière que son bord libre se trouve au-dessus de la collerette de déflexion 45 avec chevauchement sur une certaine longueur, au-dessus de l'espace de piégeage 22 délimité par la paroi du diffuseur 30a, une paroi latérale 14 du boîtier de l'embout inférieur 43 et la face supérieure de la plaque support 12. De cette manière, on réalise une seconde chicane 48 au-dessus de l'espace de piégeage 22.

Les débris qui sont arrêtés par la grille de filtration 18 sont entraînés par les tourbillons créés par le flux de fluide de refroidissement venant en contact avec la plaque adaptatrice 13, vers des zones situées à l'aplomb des bords supérieurs de la paroi tubulaire 28 du diffuseur 30a.

Les débris sont aspirés dans les espaces de piégeage 22 et 22' du fait de la dépression au niveau du col du diffuseur qui est transmise aux zones de piégeage 22 et 22' par l'intermédiaire de l'ouverture du col du diffuseur.

Les débris viennent en contact avec les parois de déflexion telles que 44, 45 et 46 qui assurent leur passage dans la partie inférieure des zones de piégeage 22 et 22' à travers les chicanes 47 et 48, du fait de l'orientation vers le bas des surfaces de déflexion 44, 45 et 46.

Lorsque des débris sont piégés dans les parties inférieures des espaces de piégeage tels que 22 et 22', ces débris ne peuvent repasser à travers les chicanes 47 et 48, du fait de l'inclinaison des parois de déflexion 44, 45 et 46, même si l'assemblage combustible est retourné de 180° tête en bas, au cours de ces manutentions.

Les débris piégés sont donc maintenus dans tous les cas dans les parties inférieures des espaces de piégeage tels que 22 et 22'.

Il est à remarquer que dans le mode de réalisation décrit sur la figure 5, l'un des espaces de piégeage 22' est délimité par les surfaces de diffuseurs voisins tels que 30a et 30b.

L'espace de piégeage 22 est délimité par la surface supérieure de la plaque de support, par des parois latérales de l'embout et par une partie de la paroi de diffuseurs, comme il a été décrit plus haut.

Les embouts d'assemblage combustible qui ont été décrits sont réalisés sous la forme de boîtiers fermés latéralement par des parois pleines et délimités à leur partie inférieure par une plaque de support et à leur partie supérieure par la plaque adaptatrice. De tels embouts permettent d'obtenir un piégeage et une récupération des débris dans les meilleurs conditions possibles et de limiter la perte de charge lors de la traversée de l'embout et de l'assemblage, grâce à une répartition optimisée du fluide de refroidissement sous la plaque adaptatrice.

De tels embouts ne permettent pas d'obtenir une redistribution des débits, sous les embouts des assemblages, entre les assemblages voisins.

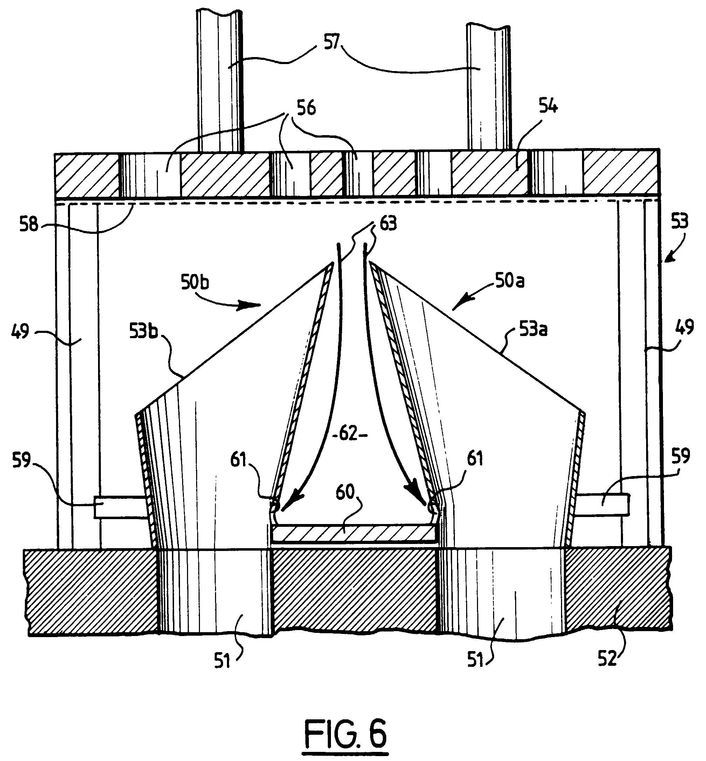

Sur la figure 6, on a représenté un embout 53 suivant l'invention permettant de réaliser une redistribution du fluide en favorisant la circulation de débits transverses entre des assemblages voisins à l'intérieur du coeur du réacteur.

L'embout 53 comporte une partie inférieure de support constituée par des pieds 49 destinés à venir reposer sur une plaque inférieure de coeur 52 d'un réacteur traversée par des ouvertures de passage d'eau de refroidissement 51.

L'embout 53 comporte également une plaque adaptatrice 54 percée d'ouvertures 56 de passage d'eau qui est fixée à l'extrémité supérieure des pieds 49 de support. Les tubes-guides 57 de l'ossature de l'assemblage sont fixés par leur partie d'extrémité inférieure dans des ouvertures de la plaque adaptatrice 54.

Un élément de filtration 58 constitué par une plaque percée de trous de petites dimensions est rapporté sous la face inférieure de la plaque adaptatrice 54.

L'embout 53 comporte quatre pieds 49 fixés par leur partie supérieure au voisinage des angles de la plaque adaptatrice 54 de forme carrée. Un ensemble constitué par quatre diffuseurs tels que 50a et 50b de forme sensiblement tronconique et une plaque centrale de fermeture 60 est fixé de manière amovible sur les pieds 49, par l'intermédiaire de dispositifs de fixation 59.

La plaque inférieure de coeur 52 est traversée, au niveau de l'assemblage comportant l'embout inférieur 53, par quatre ouvertures 51 disposées sensiblement suivant les angles d'un carré. Les quatre diffuseurs tels que 50a et 50b fixés sur les pieds 49 de l'embout 53 viennent en position juxtaposée au-dessus des ouvertures 51, lorsque l'assemblage combustible est mis en place, de manière que leur partie à plus faible section constituant le col des diffuseurs viennent sensiblement en coïncidence avec la partie supérieure de sortie d'une ouverture 51. Les diffuseurs tels que 50a et 50b sont donc placés dans une disposition en carré.

En outre, la totalité du fluide traversant la plaque inférieure de coeur par les ouvertures 51 pénètre dans les diffuseurs tels que 50a et 50b.

Les parois tronconiques des diffuseurs 50a et 50b comportent dans leur partie inférieure, des ouvertures 61 mettant en communication la partie de col de l'espace intérieur du diffuseur avec un espace de piégeage 62 délimité par les parois des quatre diffuseurs tels que 50a et 50b et par la plaque de fermeture inférieure 60 qui vient en vis-à-vis ou en appui sur une partie de la plaque inférieure de coeur 52 située entre les quatre ouvertures 51, lorsque l'assemblage de combustible est mis en place sur la plaque inférieure de coeur 52.

Les parois tronconiques des diffuseurs 50a et 50b sont d'autre part échancrées chacune en direction d'un côté extérieur ouvert de l'embout 53, entre deux pieds supports 49.

De préférence, les parois des diffuseurs 50a et 50b comportent un bord supérieur 53a ou 53b disposé dans un plan incliné vers le bas et vers l'extérieur de l'embout 53.

Lorsque de l'eau de refroidissement traverse la plaque inférieure de coeur à l'intérieur des ouvertures 51 puis pénètre dans les diffuseurs tels que 50a et 50b par leur partie inférieure, la vitesse de cette eau de refroidissement produit une pression qui est mise à profit pour créer une aspiration à partir du fond de l'espace 62 constitué par la face supérieure de la plaque de fermeture 60, représentée par les flèches 63.

Les orifices de communication 61 sont disposés à contre-courant de l'écoulement des jets issus des orifices 51.

On utilise ainsi au mieux la pression dynamique élevée qui règne à ce niveau.

Les débris qui sont arrêtés par la plaque de filtration 58 sont aspirés à l'intérieur de l'espace de piégeage 62 où ils viennent se déposer sur la face supérieure de la plaque de fermeture 60, les ouvertures 61 étant d'une dimension inférieure à la dimension des débris arrêtés par la plaque de filtration 58.

De plus, la forme dissymétrique des parois tronconiques des diffuseurs 50a et 50b entraîne la formation de flux de fluide de refroidissement dans des directions transversales, vers les assemblages voisins ; la redistribution du fluide entre les assemblages voisins est possible du fait que l'embout 53 n'est pas fermé latéralement mais comporte uniquement des pieds supports 49 au voisinage de chacun des angles de la plaque adaptatrice 54 de forme carrée.

L'embout 53 représenté sur la figure 6 permet donc d'obtenir un certain compromis entre les possibilités de redistribution transversale du flux de refroidissement et la capacité de piégeage des débris par l'embout, tout en maintenant la perte de charge à la traversée de l'embout à une valeur acceptable.

L'ensemble des diffuseurs 50a et 50b et de la plaque de fermeture 60 peut être démonté et séparé des pieds de l'assemblage, grâce au dispositif de fixation amovible 59.

On peut alors accéder, à la partie inférieure de la plaque adaptatrice, aux moyens de fixation des tubes guides 57.

La redistribution des débits sous les embouts des assemblages de combustible du coeur du réacteur est favorable, en ce qui concerne les sollicitations auxquelles sont soumis les crayons combustibles des assemblages.

Dans tous les modes de réalisation, de préférence les diffuseurs présentent une forme circulaire à leur partie inférieure de col qui est destinée à venir se superposer à une ouverture circulaire de traversée de la plaque inférieure de coeur et une forme carrée, en section transversale, à leur partie supérieure, légèrement en-dessous de la plaque adaptatrice, de manière à permettre une distribution satisfaisante du fluide de refroidissement dans l'assemblage.

L'embout inférieur suivant l'invention permet de piéger les débris arrêtés par les moyens de filtration de la plaque adaptatrice, de telle sorte que ces débris restent à l'intérieur de l'embout aussi bien pendant le fonctionnement du réacteur nucléaire qu'au cours des manutentions de l'assemblage, ces manutentions pouvant même comporter un retournement complet de l'assemblage de combustible. On évite ainsi que les débris ou corps migrants qui ont été piégés ne retombent sur la plaque inférieure de coeur du réacteur nucléaires, lors des arrêts du réacteur pour rechargement et lors des manutentions des assemblages de combustible.

Par rapport aux dispositifs de piégeage connus de l'art antérieur, le dispositif suivant l'invention permet d'éviter une fragmentation des débris ou corps migrants tels que des copeaux qui sont aspirés et maintenus dans une zone de l'espace intérieur de l'embout qui n'est pas soumise à la circulation à grande vitesse du fluide de refroidissement. Les débris ou corps migrants qui sont maintenus dans une zone calme n'ont donc pas tendance à se fragmenter en particules de petites dimensions difficilement récupérables.

L'embout inférieur suivant l'invention permet d'obtenir au centre de l'embout des vitesses de fluide qui ne sollicitent que de manière limitée un éventuel système d'instrumentation pénétrant par le bas de l'assemblage à travers la plaque inférieure de coeur.

En outre, le dispositif suivant l'invention présente une grande efficacité quant au piégeage et à la récupération des débris et une forme simple et peut être réalisé de manière qu'on puisse avoir accès facilement à la surface inférieure de la plaque adaptatrice de l'embout.

L'invention ne se limite pas au mode de réalisation qui a été décrit.

C'est ainsi qu'on peut imaginer d'autres formes de réalisation des diffuseurs et de leurs ouvertures d'aspiration ainsi que de leur moyen de fixation sur l'élément de support inférieur de l'embout.

L'invention s'applique non seulement aux assemblages de combustible à section carrée des réacteurs nucléaires à eau sous pression mais également aux assemblages de combustible présentant toute forme de section transversale et par exemple aux assemblages de combustible ayant une section transversale de forme hexagonale.

L'invention s'applique aux assemblages de combustible pour tout réacteur nucléaire refroidi à l'eau comportant un embout inférieur assurant le support de l'assemblage par lequel pénètre l'eau de refroidissement du réacteur dans l'assemblage.

## Revendications

1. Embout inférieur filtrant d'un assemblage de combustible pour un réacteur nucléaire refroidi par de l'eau comportant un élément inférieur de support (12; 49; 60) destiné à venir reposer sur une plaque inférieure de coeur (12; 42; 52) du réacteur au niveau d'au moins une ouverture de passage d'eau de refroidissement (15; 41; 51) traversant la plaque inférieure de coeur (12; 42; 52) et comprenant au moins un diffuseur d'eau (20; 30; 30'; 30a; 30b; 50a, 50b) de forme évasée dirigé suivant une direction longitudinale de l'assemblage, et
une plaque adaptatrice supérieure (13; 54) traversée par des ouvertures (16; 56) de passage d'eau de refroidissement et munie de moyens (18; 58) de filtration et de retenue de débris entraînés par l'eau de refroidissement, le diffuseur d'eau (20; 30; 30'; 30a; 30b; 50a, 50b) étant disposé dans le prolongement axial de l'ouverture de passage d'eau (15; 41; 51) de la plaque inférieure de coeur (12; 42; 52) sur laquelle repose l'assemblage de combustible en position dans le coeur du réacteur et évasé en direction de la plaque adaptatrice (13; 54), caractérisé par le fait que le diffuseur (20; 30; 30'; 30a; 30b; 50a 50b) est constitué par un conduit de forme globalement tronconique comportant une partie d'entrée (27; 37) suivant la petite base du conduit tronconique, dont le rayon est sensiblement égal au rayon des ouvertures de passage d'eau (15; 41; 51) de la plaque inférieure de coeur (12; 42; 52) et qui est superposée à une ouverture de passage d'eau (15; 41; 51), une partie d'extrémité de sortie disposée au voisinage des moyens de filtration et de retenue des débris de la plaque adaptatrice (13; 54) et au moins une ouverture (21; 31; 39; 61) dans une partie du conduit, au voisinage de sa petite base constituant le col du diffuseur, dont la dimension est inférieure à la dimension des débris arrêtés par les moyens de filtration et de piégeage (18) de la plaque adaptatrice, de manière à mettre en communication l'espace intérieur du conduit avec une zone de piégeage (22; 22'; 32; 36; 62) de l'espace intérieur de l'embout, entre l'élément inférieur de support (12; 49; 60) et la plaque adaptatrice (13; 54), la circulation d'eau de refroidissement dans le conduit du diffuseur produisant une pression dynamique utilisée pour faire circuler l'eau de haut en bas à l'extérieur des diffuseurs dans la zone de piégeage (22; 22'; 32; 36; 62) par aspiration au niveau des ouvertures (21; 31; 39; 61).

2. Embout inférieur suivant la revendication 1, caractérisé par le fait qu'il présente la forme d'un boîtier prismatique dont les parois sont constituées par l'élément de support (12) réalisé sous la forme d'une plaque traversée par au moins une ouverture (15) de passage de l'eau de refroidissement, la plaque adaptatrice (13) disposée parallèlement à la plaque de support (12) et des parois latérales pleines (14) reliées à la plaque support (12) et à la plaque adaptatrice (13), le diffuseur (20, 30, 30', 30a, 30b) étant disposé dans l'espace intérieur du boîtier et délimitant avec les parois latérales (14) du boîtier, au-dessus de la face supérieure de la plaque support (12), au moins un espace de piégeage de débris (22; 22'; 32; 62).

3. Embout inférieur suivant la revendication 2, caractérisé par le fait qu'il comporte quatre diffuseurs (20; 30; 30'; 30a, 30b) disposés dans le prolongement de quatre ouvertures de traversée (15) de la plaque support (12) qui sont placées de manière à être superposées à quatre ouvertures de la plaque inférieure de coeur du réacteur, lors de la mise en place de l'assemblage de combustible dans le coeur.

4. Embout suivant l'une quelconque des revendications 2 et 3, caractérisé par le fait que le ou les diffuseurs sont fixés sur la face supérieure de la plaque support (12).

5. Embout suivant l'une quelconque des revendications 2, 3 et 4, caractérisé par le fait que chacun des diffuseurs comporte une collerette annulaire (27, 37) fixée sur la face supérieure de la plaque support (12) le long du bord d'une ouverture de traversée (15) et une paroi tubulaire sensiblement tronconique (28, 38) engagée par sa petite base autour de l'extrémité supérieure de la collerette (27; 37), avec un jeu radial de manière à ménager l'ouverture (31; 39) de mise en communication du col du diffuseur et de l'espace de piégeage (32, 36).

6. Embout suivant la revendication 5, caractérisé par le fait que la collerette (37) comporte une extrémité supérieure (37a) de forme tronconique engagée avec un jeu (39) à l'intérieur de l'enveloppe tronconique (38) du diffuseur (30').

7. Embout suivant l'une quelconque des revendications 2 à 6, caractérisé par le fait que les parois latérales (14) du boîtier sont fixées de manière amovible sur la plaque adaptatrice (13).

8. Embout suivant l'une quelconque des revendications 2 à 6, caractérisé par le fait que la plaque support (12) est fixée de manière amovible sur les parois latérales (14) du boîtier.

9. Embout suivant la revendication 1, caractérisé par le fait que l'élément de support (49) est constitué par quatre pieds fixés au voisinage des angles d'une plaque adaptatrice (54) de forme sensiblement carrée et dans une direction perpendiculaire à la plaque adaptatrice et qu'il comporte quatre diffuseurs (50a, 50b) fixés entre les pieds (49) à l'aplomb de la plaque adaptatrice (54), dans une disposition sensiblement en carré, de manière à ménager entre leurs parois un espace de piégeage (62) communiquant avec les parties de col des diffuseurs (50a, 50b) par des ouvertures (61) et fermé à sa partie inférieure par une plaque de fermeture (60).

10. Embout suivant la revendication 9, caractérisé par le fait que les diffuseurs (50a, 50b) présentent chacun une échancrure à l'opposé de l'espace de piégeage central (62) entre les diffuseurs (50a, 50b) dirigée vers les faces extérieures de l'embout (53) entre les pieds supports (49).

11. Embout suivant l'une quelconque des revendications 1 à 10, caractérisé par le fait qu'il comporte des parois de déflexion (44, 45, 46) délimitant des chicanes de passage des débris (47, 48) au-dessus de la partie inférieure de l'espace de piégeage (22, 22'), les parois de déflexion (44, 45, 46) étant dirigées de manière à permettre le passage des débris en direction du fond des espaces de piégeage (22, 22') et à interdire le passage des débris dans l'autre sens.

12. Embout suivant l'une quelconque des revendications 1 à 11, caractérisé par le fait que le ou les diffuseurs (20) comportent des parois déflectrices de l'eau de refroidissement sur leur paroi intérieure.

## Patentansprüche

1. Filterfußstück einer Brennelementkassette für einen wassergekühlten Kernreaktor mit einem unteren Trägerelement (12; 49; 60), das vorgesehen ist, um auf einer unteren Kernplatte (12; 42; 52) des Reaktors am Ort wenigstens einer Kühlwasserdurchgangsöffnung (15; 41; 51), durch die untere Kernplatte (12; 42; 52) zu stehen , und das wenigstens einen sich erweiternd geformten, in einer Längsrichtung der Kassette orientierten Wasserdiffusor (20; 30; 30'; 30a; 30b; 50a, 50b) umfaßt, und
einer oberen Adapterplatte (13; 54), durch die Kühlwasserdurchgangsöffnungen verlaufen, und die mit Mitteln (18; 58) zum Filtern und zum Zurückhalten von vom Kühlwasser mitgeführten Reststoffen versehen sind, wobei der Wasserdiffusor (20; 30; 30'; 30a; 30b; 50a, 50b) in der axialen Verlängerung der Wasserdurchgangsöffnung (15; 41; 51) der unteren Kernplatte (12; 42; 52) angeordnet ist, auf der die im Reaktorkern positionierte Brennelementkassette steht, und in Richtung der Adapterplatte (13; 54) erweitert ist,
**dadurch gekennzeichnet, daß**
der Diffusor (20; 30; 30'; 30a; 30b; 50a, 50b) durch eine Leitung von im wesentlichen kegeliger Form gebildet ist, die einen Eingangsbereich (27; 37) an der kleinen Grundfläche der kegelförmigen Leitung, dessen Radius im wesentlichen gleich dem Radius der Öffnungen der Kühlwasserdurchgänge (15; 41; 51) der unteren Kernplatte (12; 42; 52) ist und der über einer Kühlwasserdurchgangsöffnung (15; 41; 51) angeordnet ist, einen Austritts-Endbereich, der in der Nähe der Filter- und Reststoffrückhaltemittel der Adapterplatte (13; 54) angeordnet ist, und wenigstens eine Öffnung (21; 31; 39; 61) in einem Bereich der Leitung in der Nähe ihrer den Hals des Diffusors bildenden kleinen Grundfläche umfaßt, deren Größe geringer ist als die Größe der von den Filter- und Abfangmitteln (18) der Adapterplatte zurückgehaltenen Reststoffe, so daß der Innenraum der Leitung mit einem Abfangbereich (22; 22'; 32; 36; 62) des Innenraums des Fußstücks zwischen dem unteren Tragelement (12; 49; 60) und der Adapterplatte (13; 54) in Verbindung gesetzt wird, wobei die Zirkulation von Kühlwasser in der Leitung des Diffusors einen Strömungsdruck erzeugt, der genutzt wird, um Wasser außerhalb der Diffusoren im Abfangbereich (22; 22'; 32; 36; 62) durch Ansaugen an den Öffnungen (21; 31; 39; 61) in Zirkulation von oben nach unten zu bringen.

2. Fußstück nach Anspruch 1, dadurch gekennzeichnet, daß es die Form eines prismatischen Kastens hat, dessen Wände durch das Tragelement (12), das in Form einer Platte mit wenigstens einer Kühlwasserdurchgangsöffnung (15) gebildet ist, die parallel zur Tragplatte (12) angeordnete Adapterplatte (13) und mit der Tragplatte (12) und der Adapterplatte (13) verbundene massive Seitenwände (14) gebildet sind, wobei der Diffusor (20, 30, 30', 30a, 30b) im Innenraum des Kastens angeordnet ist und zusammen mit den Seitenwänden (14) des Kastens oberhalb der Oberseite der Tragplatte (12) wenigstens einen Reststoffabfangraum (22; 22'; 32; 62) definiert.

3. Fußstück nach Anspruch 2, dadurch gekennzeichnet, daß es vier Diffusoren (20; 30; 30'; 30a, 30b) umfaßt, die in Verlängerung von vier Durchgangsöffnungen (15) der Tragplatte (12) angeordnet sind, und die so plaziert sind, daß sie über vier Öffnungen der unteren Kernplatte des Reaktors liegen, wenn die Brennelementkassette in dem Kern plaziert ist.

4. Fußstück nach einem der Ansprüche 2 und 3, dadurch gekennzeichnet, daß der Diffusor/die Diffusoren an der Oberseite der Tragplatte (12) befestigt ist/sind.

5. Fußstück nach einem der Ansprüche 2, 3 und 4, dadurch gekennzeichnet, daß jeder Diffusor einen ringförmigen Kragen (27; 37) umfaßt, der an der Oberseite der Tragplatte (12) am Rand einer Durchgangsöffnung (15) entlang befestigt ist, und eine im wesentlichen kegelförmige rohrförmige Wand (28, 38) umfaßt, die mit ihrer kleinen Grundfläche das obere Ende des Kragens (27; 37) mit einem radialen Spiel umgreift, um die Öffnung (31; 39) zum Verbinden des Halses des Diffusors und des Abfangraums (32, 36) zu bilden.

6. Fußstück nach Anspruch 5, dadurch gekennzeichnet, daß der Kragen (37) ein kegelförmiges oberes Ende (37a) aufweist, das mit einem Spiel (39) in die kegelförmige Hülle (38) des Diffusors (30') eingreift.

7. Endstück nach einem der Ansprüche 2 bis 6, dadurch gekennzeichnet, daß die Seitenwände (14) des Kastens abnehmbar an der Adapterplatte (13) befestigt sind.

8. Fußstück nach einem der Ansprüch 2 bis 6, dadurch gekennzeichnet, daß die Tragplatte (12) abnehmbar an den Seitenwänden (14) des Gehäuses befestigt ist.

9. Fußstück nach Anspruch 1, dadurch gekennzeichnet, daß das Tragelement (49) durch vier Füße gebildet ist, die in der Nähe der Ecken einer Adapterplatte (54) von im wesentlichen quadratischer Form und in einer Richtung senkrecht zur Adapterplatte befestigt sind, und daß es vier Diffusoren (50a, 50b) umfaßt, die zwischen den Füßen (49) senkrecht über der Adapterplatte (54) in einer im wesentlichen quadratischen Anordnung befestigt sind, so daß zwischen ihren Wänden ein Abfangraum (62) geschaffen wird, der mit den Halsbereichen (50a, 50b) der Diffusoren durch Öffnungen (61) verbunden ist und in seinem unteren Bereich durch eine Verschlußplatte (60) verschlossen ist.

10. Fußstück nach Anspruch 9, dadurch gekennzeichnet, daß jeder der Diffusoren (50a, 50b) einen vom zentralen Abfangraum (62) zwischen den Diffusoren (50a, 50b) abgewandten und den Außenflächen des Fußstücks (53) zwischen den Tragfüßen (49) zugewandten bogenförmigen Ausschnitt aufweisen.

11. Fußstück nach einem der Ansprüche 1 bis 10, dadurch gekennzeichnet, daß es Ablenkwände (44, 45, 46) aufweist, die Hindernisse für den Durchgang der Reststoffe (47, 48) oberhalb des unteren Bereichs des Abfangraums (22, 22') begrenzen, wobei die Ablenkwände (44, 45, 46) so ausgerichtet sind, daß sie den Durchgang der Reststoffe in Richtung des Bodens der Abfangräume (22, 22') zulassen und den Durchgang der Reststoffe in Gegenrichtung verhindern.

12. Fußstück nach einem der Ansprüche 1 bis 11, dadurch gekennzeichnet, daß der oder die Diffusoren (20) an ihrer Innenwand Ablenkwände für das Kühlwasser aufweist/aufweisen.

## Claims

1. Lower filtering connector of a fuel assembly for a water-cooled nuclear reactor having a lower support element (12; 49; 60) intended to come to rest on a lower core plate (12; 42; 52) of the reactor at the level of at least one opening for the passage of cooling water (15; 41; 51) passing through the lower core plate (12; 42; 52) and comprising at least one water diffuser (20; 30; 30'; 30a; 30b; 50a, 50b) with a widening shape following a longitudinal direction of the assembly, and an upper adapter plate (13; 54) which has openings (16; 56) passing through it for the passage of cooling water end is equipped with means (18; 58) for filtering and trapping debris carried along by the cooling water, the water diffuser (20; 30; 30'; 30a; 30b; 50a, 50b) being disposed in the axial extension of the opening for the passage of water (15; 41; 51) in the lower core plate (12; 42; 52) on which the fuel assembly rests in position in the core of the reactor and widened in the direction of the adapter plate (13; 54), characterised in that the diffuser (20; 30; 30'; 30a; 30b; 50a, 50b) is formed by a conduit with the overall shape of a truncated cone having an inlet part (27; 37) following the small base of the conduit in the shape of a truncated cone, the radius of which is substantially equal to the radius of the openings for the passage of water (15; 41; 51) of the lower core plate (12; 42; 52) and which is superimposed on an opening for the passage of water (15; 41; 51), an end outlet part disposed in the vicinity of the means for filtering and trapping debris of the adapter plate (13; 54) and at least one opening (21; 31; 39; 61) in a part of the conduit, in the vicinity of its small base forming the neck of the diffuser, the dimension of which is smaller than the dimension of the pieces of debris stopped by the filtering and trapping means (18) of the adapter plate, in such a way as to place the internal space of the conduit in communication with a trapping zone (22; 22'; 32; 36; 62) of the internal space of the connector, between the lower support element (12; 49; 60) and the adapter plate (13; 54), the circulation of cooling water in the conduit of the diffuser producing a dynamic pressure which is utilised to make the water circulate from top to bottom outside the diffusers in the trapping zone (22; 22'; 32; 36; 62) by drawing in at the level of the openings (21; 31; 39; 61).

2. Lower connector as claimed in Claim 1, characterised in that it has the form of a prismatic housing of which the walls are formed by the support element (12) produced in the form of a plate which has at least one opening (15) for the passage of cooling water passing through it, the adapter plate (13) disposed parallel to the support plate (12) and solid lateral walls (14) connected to the support plate (12) and to the adapter plate (13), the diffuser (20, 30, 30', 30a, 30b) being disposed in the internal space of the housing and delimiting with the lateral walls (14) of the housing, above the upper face of the support plate (12), at least one space for trapping debris (22; 22'; 32; 62).

3. Lower connector as claimed in Claim 2, characterised in that it has four diffusers (20; 30; 30'; 30a, 30b) disposed in the extension of four through openings (15) in the support plate (12) which are positioned so as to be superimposed on four openings in the lower core plate of the reactor, when the fuel assembly is put in place in the core.

4. Connector as claimed in any one of Claims 2 and 3, characterised in that the diffuser or diffusers is/are fixed on the upper face of the support plate (12).

5. Connector as claimed in any one of Claims 2, 3 and 4, characterised in that each of the diffusers has an annular collar (27; 37) fixed on the upper face of the support plate (12) along the rim of a through opening (15) and a tubular wall substantially In the shape of a truncated cone (28, 38) engaged by its small base around the upper end of the collar (27; 37), with a radial clearance in such a way as to provide the opening (31; 39) which places the neck of the diffuser and the trapping space (32, 36) in communication.

6. Connector as claimed in Claim 5, characterised in that the collar (37) has an upper end (37a) in the shape of a truncated cone which is engaged with a clearance (39) in the interior of the casing (38), which is in the shape of a truncated cone, of the diffuser (30').

7. Connector as claimed in any one of Claims 2 to 6, characterised in that the lateral walls (14) of the housing are fixed in a removable manner on the adapter plate (13).

8. Connector as claimed in any one of Claims 2 to 6, characterised in that the support plate (12) is fixed in a removable manner on the lateral walls (14) of the housing.

9. Connector as claimed in Claim 1, characterised in that the support element (49) is formed by four feet fixed in the vicinity of the corners of an adapter plate (54) of substantially square shape and in a direction perpendicular to the adapter plate, and that it has four diffusers (50a, 50b) fixed between the feet (49) vertically in line with the adapter plate (54), in a substantially square arrangement, in such a way as to provide between their walls a trapping space (62) which communicates with the neck parts of the diffusers (50a, 50b) through openings (61) and is closed on its lower part by a closure plate (60).

10. Connector as claimed in Claim 9, characterised in that the diffusers (50a, 50b) each have a cutaway opposite the central trapping space (62) between the diffusers (50a, 50b) and directed towards the external faces of the connector (53) between the support feet (49).

11. Connector as claimed in any one of Claims 1 to 10, characterised in that it has deflecting walls (44, 45, 46) delimiting baffles for the passage of debris (47, 48) above the lower part of the trapping space (22, 22'), the deflecting walls (44, 45, 46) being directed in such a way as to permit the passage of the debris in the direction of the base of the trapping spaces (22, 22') and to prevent the passage of debris in the other direction.

12. Connector as claimed in any one of Claims 1 to 11, characterised in that the diffuser or diffusers (20) has/have walls which deflect cooling water on their internal wall.
